# EUROPEAN PATENT APPLICATION

(11) **EP 3 527 634 A1**
(43) Date of publication of application: **21.08.2019**
(21) Application number: 18156883.3
(22) Date of filing: 15.02.2018
(51) Int. Cl.: C09D 127/18, C08F 214/26, C08F 2/24, C08J 5/00

(54) **FLUOROPOLYMERS AND FLUOROPOLYMER DISPERSIONS**

(71) Applicant: 3M Innovative Properties Company, Saint Paul, MN 55133-3427 (US)
(72) Inventor: The designation of the inventor has not yet been filed
(74) Representative: Kurz, Arnd

(57) **Abstract**

A tetrafluoroethene copolymer having a melting point of from about 240°C to 325°C, a melt flow index (MFI at 372°C and 5 kg load) of 0.5-80 grams / 10 minutes and having at least 70% by weight of units derived from tetrafluoroethene and further comprising units derived from perfluoromethyl vinyl ether (PMVE) and at least one perfluorinated alkyl allyl ether (PAAE) comonomer corresponding to the general formula:

CF₂=CF-CF₂-O-Rf (I)

where Rf is a perfluorinated alkyl residue having from 1 to 10 carbon atoms and wherein the alkyl chain of the residue may be interrupted once or more than once by an oxygen atom and wherein the content of units derived from PMVE and PAAEs is at least 1.0 % by weight.

## Description

### Field

The present disclosure relates to fluoropolymers and fluoropolymer dispersions, to methods of making them and to their applications.

### Background

Fluorinated polymers with a high content of TFE and thus high melting points and low melt-flow indexes are typically prepared by aqueous emulsion polymerization, i.e., a radical polymerization carried out in an aqueous phase in the presence of an emulsifier. A perfluorinated alkanoic acid, in particular perfluorooctanoic acid, has been widely used in the industry as preferred emulsifier. Due to the poor biodegradation of perfluorooctanoic acid there is a need to avoid or reduce its use. Polymerizations without adding any perfluoroalkanoic acids have been developed, for example polymerizations using more biodegradable alternative fluorinated emulsifiers as described for example in US Patent No 7,671,112.

However, perfluorinated alkanoic acids, in particular those having from 6 to 12 carbon atoms, have been found in copolymers of TFE and PPVE and higher chain homologues of PPVE even if no such perfluorinated alkanoic acids had been used in the production of the polymers. It is believed that these alkanoic acids may be formed as side products during the polymerization when perfluorinated propyl vinyl ethers and other higher types of vinyl ethers are used as comonomers. Perfluorinated propyl vinyl ethers are commonly used as comonomers in the production of fluoropolymers to provide melt-processable thermoplastic polymers for making shaped articles which great chemical inertness high service temperatures and to provide shear stable fluoropolymer dispersions, for example as coating compositions.

Therefore, there is a need to provide high-melting TFE-based copolymers and TFE-based copolymer dispersions without creating any perfluorinated alkanoic acids, in particular those with C₆ to C₁₂ alkyl chains, or creating these compounds at very low amounts only. In addition, the resulting polymers advantageously have good mechanical properties, in particular mechanical properties that allow for coatings and making shaped articles.

### Summary

In one aspect there is provided a tetrafluoroethene copolymer having a melting point of from about 240°C to 325°C, a melt flow index (MFI at 372°C and 5 kg load) of 0.5-80 grams / 10 minutes and having at least 70% by weight of units derived from tetrafluoroethene and further comprising units derived from perfluoromethyl vinyl ether (PMVE) and at least one perfluorinated alkyl allyl ether (PAAE) comonomer corresponding to the general formula:

CF₂=CF-CF₂-O-Rf (I)

where Rf is a perfluorinated alkyl residue having from 1 to 10 carbon atoms and wherein the alkyl chain of the residue may be interrupted once or more than once by an oxygen atom and wherein the content of units derived from PMVE and PAAEs is at least 1.0 % by weight.

In another aspect there is provided an aqueous dispersion comprising the copolymer.

In a further aspect there is provided a method for producing the tetrafluoroethene copolymer comprising copolymerizing tetrafluoroethene, perfluoromethyl vinyl ether and the one or more perfluorinated alkyl allyl ethers, through aqueous emulsion polymerization without added perfluorinated alkanoic acid emulsifiers.

In yet another aspect there is provided an article comprising the tetrafluoroethene copolymer.

In yet a further aspect there is provided a coating obtained with the dispersion.

In another aspect there is provided a method of making a coating comprising providing a composition comprising the dispersion and applying the composition to a substrate and removing the water.

### Detailed Description

In this application terms such as "a" or "an" are meant to encompass "one or more" and are used interchangeably with the term "at least one".

Any numerical ranges of amounts of ingredients or parameters describing physical/mechanical properties are inclusive of their end points and non-integral values between the endpoints unless stated otherwise (e.g. 1 to 5 includes 1, 1.5, 2, 2.75, 3.80, 4, 5 etc.).

Unless noted otherwise, all parts and percentages are by weight and are based on the total weight of the composition, which is 100% by weight. The amounts of all ingredients of that composition add up to 100% by weight. Likewise percentages indicated to be by mole are based on the total molar composition, which is 100% by mole. The molar percentages of all ingredients of that composition add up to 100% by mole.

In case the description refers to standards like DIN, ASTM, ISO etc and in case the year that standard was issued is not indicated, the version that was in force in 2017 is referred to. In case no version was in force in 2017 anymore, for example the standard has expired, the version in force at the date closest to 2017 is referred to.

The tetrafluoroethene-based polymers of the present disclosure comprise units derived from tetrafluoroethene (TFE), and at least one perfluorinated alkyl allyl ether (PAAE). Such polymers can be provided essentially free of perfluorinated alkanoic acids and form shear-stable aqueous dispersions. To improve the mechanical properties of the polymers, the polymers preferably contain additionally repeating units derived from perfluoromethyl vinyl ether (PMVE; CF₂=CF-O-CF₃).

The polymers are TFE-based and comprise at least 75 % by weight, preferably at least 85% by weight and more preferably at least 94 % by weight of comonomer units derived from TFE.

### PAAEs

The TFE-based polymers further comprise units derived from one or more than one perfluorinated alkyl allyl ether (PAAE's). Suitable PAAEs include unsaturated ethers according to the general formula:

CF₂=CF-CF₂-ORf (I).

In formula (I) Rf represents a linear or branched, cyclic or acyclic perfluorinated alkyl residue. Rf may contain up to 10 carbon atoms, i.e., 1, 2, 3, 4, 5, 6, 7, 8, 9 or 10 carbon atoms. Preferably Rf contains up to 8, more preferably up to 6 carbon atoms and most preferably 3 or 4 carbon atoms. The residue may contain one or more than one catenary oxygen atom. Specific examples of Rf include perfluoromethyl (CF₃), perfluoroethyl (C₂F₅), perfluoropropyl (C₃F₇), and perfluorobutyl (C₄F₉), preferably C₂F₅, C₃F₇ or C₄F₉. Examples of Rf with one or more than one catenary oxygen atoms include but are not limited to residues containing one or more of the following units and combinations thereof: -(CF₂O)-, -(CF₂CF₂-O)-, (-O-CF₂)-, -(O-CF₂CF₂)-, -CF(CF₃)-, -CF(CF₂CF₃)-, -O-CF(CF₃)-, -O-CF(CF₂CF₃)-, -CF(CF₃)-O-, -CF(CF₂CF₃)-O-. Further examples of Rf include but are not limited to:

-(CF₂)ᵣ₁-O-C₃F₇,

-(CF₂)ᵣ₂-O-C₂F₅,

-(CF₂)ᵣ₃-O-CF₃,

-(CF₂-O)ₛ₁-C₃F₇,

-(CF₂-O)ₛ₂-C₂F₅,

-(CF₂-O)ₛ₃-CF₃,

-(CF₂CF₂-O)ₜ₁-C₃F₇,

-(CF₂CF₂-O)ₜ₂-C₂F₅,

-(CF₂CF₂-O)ₜ₃-CF₃,

wherein r1 and s1 represent 1, 2, 3, 4, or 5, r2 and s2 represent 1, 2, 3, 4, 5 or 6, r3 and s3 represent 1, 2, 3, 4, 5, 6 or 7; t1 represents 1 or 2; t2 and t3 represent 1, 2 or 3.

Specific examples of PAAE comonomers include

F₂C=CF-CF₂-O-(CF₂)₃-(OCF₂) ₂-F,

F₂C=CF-CF₂-O-CF₂-(OCF₂)₃-CF₃,

F₂C=CF-CF₂-O-CF₂-(OCF₂)₄-CF₃,

F₂C=CF-CF₂-O-(CF₂O)₂-OCF₃

F₂C=CF-CF₂-O-(CF₂O)₃-OCF₃

F₂C=CF-CF₂-O-(CF₂O)₄-OCF₃.

In a particular embodiment Rf is selected from C₃F₇ or C₄F₉ and preferably is linear. Most preferred is CF₂=CF-CF₂-O-CF₂-CF₂-CF₃ (MA-3).

Perfluorinated alkyl allyl ethers as described above are either commercially available, for example from Anles Ltd. St. Peterburg, Russia or can be prepared according to methods described in U.S. Pat. No. 4,349,650 (Krespan) or by modifications thereof or by methods known to the skilled person.

Instead of using a single PAAE comonomer also a combination of different PAAE comonomers may be used.

### Co-polymerizable optional comonomers

The copolymers of the present disclosure may contain, optionally, units derived from further co-polymerizable comonomers, they are referred to herein as "co-polymerizable optional comonomers". Such comonomers may be fluorinated or non-fluorinated but preferably are fluorinated, chlorinated or chlorinated and fluorinated. These copolymerizable optional comonomers preferably contain an alpha-olefinic functionality, i.e. a CX₁X₂=CX₃- group wherein X₁,X₂ and X₃ are independently from each other F, Cl or H with the proviso that at least one is H or F. Preferably all of X₁, X₂ and X₃ are F. The optional comonomers include other perfluorinated alpha-olefins such as hexafluoropropene (HFP), or partially fluorinated alpha olefins such as vinylidenefluoride, vinylfluoride, or F and Cl containing olefins such as chlorotrifluoroethene, or non-fluorinated alpha olefins such as ethane or propene. Also vinyl ethers other than PMVE may be used, however, such other vinyl ethers may cause the formation of perfluorinated alkanoic acids during the polymerization reaction. Such vinyl ethers may preferably only be used in low amounts or only for short polymerization periods and, preferably, are avoided.

The optional comonomers also include "functional comonomers". Functional comomonomers, contain additional functional groups. Such functional groups include a second or third alpha-olefinic group or more additional unsaturations, for example to introduce branching sites ("branching modifiers"). Other functional groups include polar end groups ("polarity modifiers"). Polarity modifiers include olefins having polar groups for example acid groups or protected acid groups as additional functional groups. To improve shear stability polarity modifiers may be used as functional monomers. Polarity modifiers may introduce end groups and the end groups may help to stabilize the dispersion, or in combination with appropriate emulsifiers. Polarity modifiers include comonomers with an alpha-olefinic functionality and at least one functional group, preferably an acid group such as an -COOX or an -SO₂X group wherein X may be a hydrogen proton or a metal or ammonium cation. Examples of polarity modifiers include but are not limited to olefin monomers independently represented by formula CF₂=CF(CF₂)ₐ-(OC_{b}F_{2b})_{c}-(O)_{d}-(CₑF₂ₑ)-SO₂X, and CF₂=CF(CF₂)ₐ-(OC_{b}F_{2b})_{c}-(O)_{d}-(CₑF₂ₑ)-COOX wherein a is 0 or 1, each b is independently from 1 to 4, c is 0 to 4, d is 0 or 1, e is 1 to 6, and X is as defined above. In some embodiments, b is 1 to 3, 1 to 2, or 1. In some embodiments, c is 0, 1, or 2; 1 or 2; or 0 or 1. In some embodiments, e is 1 to 4, 1 to 3, or 1 to 2. In some embodiments, c is 0, d is 1, and e is 1 to 4. In some embodiments, a is 0, OC_{b}F_{2b} is OCF₂CF(CF₃), c is 1 or 2, d is 1, and e is 1 to 4. In some embodiments, a is 1, b is 1, c is 0 to 4, d is 1, e is 1 to 4. CₑF₂ₑ may be linear or branched. In some embodiments, CₑF₂ₑ can be written as (CF₂)ₑ, which refers to a linear perfluoroalkylene group. When c is 2, the b in the two C_{b}F_{2b} groups may be independently selected. However, within a C_{b}F_{2b} group, a person skilled in the art would understand that b is not independently selected. Examples of suitable olefin monomers represented by formula CF₂=CF(CF₂)ₐ-(OC_{b}F_{2b})_{c}-(O)_{d}-(CₑF₂ₑ)-SO₂X include CF₂=CF-CF₂-SO₂X, CF₂=CF-O-CF₂-CF₂-SO₂X, CF₂=CF-CF₂-O-CF₂-CF₂-SO₂X, CF₂=CF-O-(CF₂)₄-SO₂X, CF₂=CF-CF₂-O-(CF₂)₄-SO₂X, and CF₂=CF-O-CF₂-CF(CF₃)-O-CF₂-CF₂-SO₂X. CF₂=CF(CF₂)ₐ-(OC_{b}F_{2b})_{c}-(O)_{d}-(CₑF₂ₑ)-CO₂X include CF₂=CF-CF₂-CO₂X, CF₂=CF-O-CF₂-CF₂-CO₂X, CF₂=CF-CF₂-O-CF₂-CF₂-CO₂X, CF₂=CF-O-(CF₂)₄-CO₂X, CF₂=CF-CF₂-O-(CF₂)₄-CO₂X, and CF₂=CF-O-CF₂-CF(CF₃)-O-CF₂-CF₂-CO₂X. Certain of these olefin monomers are commercially available. Others may be prepared by known methods. See, for example, U.S. Pat. Nos. 3,282,875 (Connolly), 3,718,627 (Grot), 4,267,364 (Grot), and 4,273,729 (Krespan). To achieve a range from 0 to 200 -SO₂X groups per 10⁶ carbon atoms, the amount of CF₂=CF-O-CF₂-CF(CF₃)-O-CF₂-CF₂-SO₂X, for example, is typically less than 0.18 weight percent (wt. %), based on the total weight of the monomers incorporated into the copolymer. Such functional comonomers are preferably added into the polymerization at the final stages of the polymerization, analogue to the polymerization as described in EP 1,533,325 B1

### Polymer Properties

An advantage of the polymers according to the present disclosure is that they can be prepared as dispersions that are essentially free of any perfluorinated alkanoic acids, in particular, essentially free of such acids with 6 to 12 carbon atoms. When referred to as perfluorinated alkanoic acids, the term is meant to include the free acids and also their salts. "Essentially free" in this context refers to total and combined amounts of perfluorinated C6 to C12 acids of less than 500 ppb, preferably less than 200 ppb and more preferably less than 100 ppb. It is believed that the polymers dispersions are also essentially free of perfluoroalkanoic acids having from 2 to 16 carbon atoms. The polymer dispersions may contain a total amount of C9 to C14 perfluorinated alkanoic acids of less than 100 ppb, preferably less than 50 ppb (based on the weight of the polymer), for example from 2 to 20 ppb (based on the weight of the polymer). These amounts of acids/salts apply to raw dispersions, for example to dispersions with a polymer content (solid content) of from about 10 to 40% by weight, as well as to upconcentrated dispersions, for example dispersions with a polymer content of from 50 to 70% by weight. The amounts on acids are based on the total weight of the dispersion if not indicated otherwise. Since no perfluorinated alkanoic acids and salts were added in the preparation of the polymers such amounts are also referred to as "extractables".
The polymer is then dispersed or suspended in an aqueous matrix for the measurement as described in the method section.

Perfluorinated alkanoic acids can be represented by the general formula

F₃C-(CF₂)n-COOM (III)

wherein n is an integer. For example if n is 4, the resulting acid is a C6 acid. Typically n is an integer of from 1 to 14, preferably from (and including) 4 to 10. M is H in case of the free acid or a cation, for example a metal cation or ammonium cation in case the acid is present as a salt. In case of perfluorooctanoic acid, n is 6 to give a total amount of carbon atoms of 8 ("C₈-acid").

Despite having the low amount of acids, the polymers still have good mechanical properties and can be used to make shaped articles or can be used for coatings or impregnating substrates. To make shaped articles, the polymers are separated from their dispersions as will be described below. To make coatings, the polymers are typically upconcentrated to increase the polymer content in the dispersion as will be described in greater detail below.

The TFE-based copolymers of the present disclosure typically have a melting point of from about 240°C to about 325°C. In one embodiment the copolymers are high melting. They may have a melting point of from 265°C to 325°C and preferably a melting point of at least 286°C, for example a melting point within the range of from 286°C up to 316°C.

The TFE-based copolymers of the present disclosure are melt-processable. They typically have a melt flow index (MFI) at a temperature of 372°C and a 5 kg load of from about 0.5 to 80 grams per 10 minutes, preferably from about 1.0 gram / 10 minutes to 50 grams / 10 minutes, more preferably from 1.1 g / 10 min to 35 g/10 mins.

The TFE-based copolymers preferably a tensile strength of at least 17 MPa, for example between 21 and 60 MPa. The TFE-based copolymers preferably have an elongation at break of at least 230% (length/length), in some embodiments between 250 and 400%. The TFE-based copolymers may have a flexural modulus of at least 520, in some embodiments between 520 and 600 MPa (ASTM D 790; injection molded bars, 127 mm by 12.7 mm by 3.2 mm, 23°C. The polymers typically may have a specific gravity (DIN EN ISO 12086) of from 2.11 to 2.17 g/cm³. The copolymer typically may have a hardness (shore D; DIN EN ISO 868) of from 40 to 80, preferably 50 to 70.

The TFE-based copolymers with the above properties may be prepared using the comonomer described herein in the appropriate amounts. Preferably, the copolymers are perfluorinated, which means they are free or essentially free of units derived from any partially or non-fluorinated comonomers. The tetrafluoroethene-based copolymers typically contain units derived from the PAAE comonomers in an amount of from about of 0.5 % by weight to about 6 % by weight based on the weight of the polymer, preferably from about 1.5 to 4.0 % by weight. The weight ratio of units derived from PAAE to units derived from PVE may be from 1 : 10 to 10 :1, preferably from 1 : 5 to 5 : 1. Typically, the TFE-based copolymer has from 75 to 99 % by weight units derived from tetrafluoroethene and from 0.1 to 6% by weight of units derived from the at least one PAAE as described above and from 0.1 to 6 % by weight, preferably up to 4.4% by weight of units derived from PMVE. The polymer may have from 0 up to 8% by weight of units derived from one or more co-polymerizable comonomers as described above, preferably HFP and/or one or more functional comomers (polarity modifiers for creating polar end groups). Preferably, the total amount of PAAE comonomers and PMVE is at least 1.1 % by weight, preferably at least 1.5 % by weight. The total amount of units of the polymer gives 100.0% by weight. Preferably the PAAE comonomers comprise MA-3.

Preferably, the TFE-based copolymers contain from 90 to 98 % by weight of units derived from TFE and from 1.5 to 10% of units derived from one or more PAAE and from PMVE and from 0 - 5% of units derived from one or more perfluorinated optional comonomers with the total amount of units corresponding to 100% weight.
In one embodiment the TFE-based copolymer of the present disclosure comprises from 94 to 99 % by weight units derived from tetrafluoroethene and from 1 to 5% by weight of units derived from the at least one PAAE and from 0.5 % up to 5 % by weight, preferably up to 4.4% by weight of units derived from PMVE and from 0 to 5% by weight, preferably from 0 to 1.5% by weight, of one or more co-polymerizable optional comonomer, wherein the total amount of units is 100% by weight.

### Methods of preparing the polymers

The tetrafluoroethene copolymers described herein may be prepared by emulsion or suspension polymerization in an aqueous phase. In case of emulsion polymerization an emulsifier is used. In case of a suspension polymerization no emulsifier is used. Emulsion polymerization is preferred as it results in stable dispersions of small polymer particles. TFE is copolymerized in the presence of initiators and the comonomers described above. The comonomers are used in effective amounts to produce a copolymer with the properties described herein. Effective amounts are within the amounts described and exemplified herein.

Typically, fluorinated emulsifiers are employed in the aqueous emulsion polymerization, however, the polymerization is carried out without adding any perfluorinated alkanoic acids, i.e., compounds according to the formula (II), and in particular the polymerization is carried out without adding perfluorinated octanoic acid.

Alternative fluorinated emulsifiers or non-fluorinated emulsifiers may be used instead. When used, a fluorinated alternative emulsifier is typically used in an amount of 0.01% by weight to 1% by weight based on solids (polymer content) to be achieved. Suitable alternative fluorinated emulsifiers include those that correspond to the general formula:

[R_{f}-O-L-COO⁻]ᵢXᵢ⁺ (IV)

wherein L represents a linear or branched or cyclic partially or fully fluorinated alkylene group or an aliphatic hydrocarbon group, R_{f} represents a linear or branched, partially or fully fluorinated aliphatic group or a linear or branched partially or fully fluorinated group interrupted once or more than once by an ether oxygen atom, Xi⁺ represents a cation having the valence i and i is 1, 2 and 3. In case the emulsifier contains partially fluorinated aliphatic groups it is referred to as a partially fluorinated emulsifier. Preferably, the molecular weight of the emulsifier is less than 1,500 g/mole. Specific examples are described in, for example, US Patent No. 7,671,112. Exemplary emulsifiers include: CF₃CF₂OCF₂CF₂OCF₂COOH, CHF₂(CF₂)₅COOH, CF₃(CF₂)₆COOH, CF₃O(CF₂)₃OCF(CF₃)COOH, CF₃CF₂CH₂OCF₂CH₂OCF₂COOH, CF₃O(CF₂)₃OCHFCF₂COOH, CF₃O(CF₂)₃OCF₂COOH, CF₃(CF₂)₃(CH₂CF₂)₂CF₂CF₂CF₂COOH, CF₃(CF₂)₂CH₂(CF₂)₂COOH, CF₃(CF₂)₂COOH, CF₃(CF₂)₂(OCF(CF₃)CF₂)OCF(CF₃)COOH, CF₃(CF₂)₂(OCF₂CF₂)₄OCF(CF₃)COOH, CF₃CF₂O(CF₂CF₂O)₃CF₂COOH, and their salts.

In one embodiment, the molecular weight of the emulsifier, preferably a partially fluorinated emulsifier, is less than 1500, 1000, or even 500 grams/mole.

In order to further improve the stability of the aqueous emulsion, it may be preferred to add one or more emulsifiers during or after the polymerization.

The emulsifier may be added as a microemulsion with a fluorinated liquid, such as described in U.S. Publ. No. 2008/0015304 (Hintzer et al.), WO Publ. No. 2008/073251 (Hintzer et al.), and EP Pat. No. 1245596 (Kaulbach et al.).

Instead of using alternative emulsifiers also the use of non-fluorinated emulsifiers is contemplated. They may be useful when polymers with low melting points or high MFI's are being produced. Examples for polymerizations of fluoropolymers with non-fluorinated emulsifiers are described, for example, in U.S. patent application No. US 2007/0149733.

The aqueous emulsion polymerization may be initiated with a free radical initiator or a redox-type initiator. Any of the known or suitable initiators for initiating an aqueous emulsion polymerization of TFE can be used. Suitable initiators include organic as well as inorganic initiators. Exemplary inorganic initiators include: ammonium-, alkali- or earth alkali salts of persulfates, permanganic or manganic acids, with potassium permanganate preferred. A persulfate initiator, e.g., ammonium persulfate (APS), may be used on its own or may be used in combination with a reducing agent. The reducing agent typically reduces the half-life time of the persulfate initiator. Additionally, a metal salt catalyst such as for example copper, iron, or silver salts may be added.

The amount of the polymerization initiator may suitably be selected, but it is usually from 2 to 600 ppm, based on the mass of water used in the polymerization. The amount of the polymerization initiator can be used to adjust the MFI of the tetrafluoroethene copolymers. If small amounts of initiator are used a low MFI may be obtained. The MFI can also, or additionally, be adjusted by using a chain-transfer agent. Typical chain-transfer agents include ethane, propane, butane, alcohols such as ethanol or methanol or ethers like but not limited to dimethyl ether, tertiary butyl ether, methyl tertiary butyl ether. The amount and the type of perfluorinated comonomer may also influence the melting point of the resulting polymer.

The aqueous emulsion polymerization system may further comprise auxiliaries, such as buffers because some initiators are most effective within certain pH ranges, and complex-formers. It is preferred to keep the amount of auxiliaries as low as possible to ensure a higher colloidal stability of the polymer latex.

The polymerization is preferably carried out by polymerizing TFE and the comonomers simultaneously. Typically, the reaction vessel is charged with the ingredients and the reaction is started by activating the initiator. In one embodiment the TFE and the comonomers are then continuously fed into the reaction vessel after the reaction has started. They may be fed continuously or discontinuously, at a constant TFE : comonomer ratio or at a changing TFE : comonomer ratios.

In another embodiment, a seeded polymerization may be used to produce the tetrafluoroethene copolymers. If the composition of the seed particles is different from the polymers that are formed on the seed particles a core-shell polymer is formed. That is, the polymerization is initiated in the presence of small particles of fluoropolymer, typically small PTFE particles that have been homopolymerized with TFE or produced by copolymerizing TFE with one or more perfluorinated comonomers as described above. These seed particles typically have an average diameter of between 50 and 100 nm or 50 and 150 nm (nanometers). Such seed particles may be produced, for example, in a separate aqueous emulsion polymerization. They may be used in an amount of 20 to 50% by weight based on the weight of water in the aqueous emulsion polymerization. Accordingly, the thus produced particles will comprise a core of a homopolymer of TFE or a copolymer of TFE and an outer shell comprising either a homopolymer of TFE, or a copolymer of TFE. The polymer may also have one or more intermediate shells if the polymer compositions are varied accordingly. The use of seed particles may allow a better control over the resulting particle size and the ability to vary the amount of TFE in the core or shell. Such polymerization of TFE using seed particles is described, for example, in U.S. Pat. No. 4,391,940 (Kuhls et al.) or WO03/059992 A1.

The aqueous emulsion polymerization, whether done with or without seed particles, will preferably be conducted at a temperature of at least 65°C, preferably at least 70°C. Lower temperatures may not allow to introduce sufficient amounts of PAAE into the polymer to reach the required comonomer content. Upper temperatures may typically include temperatures of 80°C, 90°C, 100°C, 110°C, 120°C, or even 150°C.

The polymerization will preferably be conducted at a pressure of at least 0.3, 1.0, 1.5, 1.75, 2.0, or even 2.5 MPa (megaPascals); at most 2.25, 2.5, 3.0, 3.5, 3.75, 4.0, or even 4.5 MPa.

The aqueous emulsion polymerization usually is carried out until the concentration of the polymer particles in the aqueous emulsion is at least 15, 20, 25, or even 30 % by weight (also referred to as "solid content"). To further increase the shear stability of the fluoropolymer dispersion small amounts of comonomers, for example HFP or other perfluorinated comonomers may be added towards the final stage of the polymerization, as described, for example, in EP 1,533,325 B1. Instead of non-function comonomers like HFP or other alpha olefinic perfluorinated comonomers, also functional comonomers as described above (polarity modifiers) may be added towards the final stages of the polymerization analogue to the methods described in EP 1,533,325 B1.

In the resulting dispersion, the average particle size of the polymer particles (i.e., primary particles) is at least 50, 100, or even 150 nm; at most 250, 275, 300, or even 350 nm. These raw dispersions may be subjected to upconcentration to provide fluoropolymer dispersions that may be used, for example, for coating or impregnating substrates.

### Fluoropolymer Dispersions

In one embodiment of the present disclosure, the fluoropolymers described herein are provided in the form of an aqueous dispersion. In one embodiment, the dispersion is a raw dispersion, for example a reaction mixture. Such dispersions typically have a fluoropolymer content (solid content) of from about 10 to 35% by weight. Such dispersions are typically free of non-fluorinated anionic, cationic and particularly non-ionic surfactants, in particular of the non-ionic surfactant described below.

In another embodiment of the present disclosure the fluoropolymers described herein are provided as upconcentrated dispersions. For example, the aqueous fluoropolymer dispersions may have a copolymer content of at least 45 % by weight, for example, between 50 and 70 % by weight, or between 46 and 66% by weight (based on the total weight of the dispersion).

Such dispersions may be obtained from the raw dispersions by upconcentration, for example using ultrafiltration as described, for example in US 4,369,266 or by thermal decantation (as described for example in US 3,037,953) or by electrodecantation.

Since, the amounts of perfluorinated acids in the raw and upconcentrated dispersions is already very low, there is no need to subject the dispersions to a treatment to remove them but such a treatment is not detrimental. However, after the conclusion of the polymerization reaction, the dispersions may be treated by anion exchange to remove the alternative fluorinated emulsifiers as described above, if desired. Methods of removing the emulsifiers from the dispersions by anion-exchange and addition of non-ionic emulsifiers are disclosed for example in EP 1 155 055 B1, by addition of polyelectrolytes are disclosed in WO2007/142888 or by addition of non-ionic stabilizers such as polyvinyl alcohols, polyvinyl esters and the like. Typically, dispersions subjected to a treatment of reducing the amount of the alternative fluorinated emulsifiers contain a reduced amount thereof, such as for example amounts of from about 1 to about 500 ppm (or 2 to 200 ppm) based on the total weight of the dispersion. Reducing the amount of the alternative fluorinated emulsifiers can be carried out for individual dispersion or for combined dispersion, e.g. bimodal or multimodal dispersions.

Salts or ionic emulsifiers may be added to the dispersion to adjust their properties, in particular when the dispersions are used for coating applications, for example to adjust the viscosity, shelf-life or the wettability of the dispersions. For example, the level of conductivity may be adjusted by adding an anionic non-fluorinated surfactant to the dispersion as disclosed in WO 03/020836. Adding cationic emulsifiers to the dispersions is also possible, as described for example in WO 2006/069101. Typical anionic non-fluorinated surfactants that may be used include surfactants that have an acid group, in particular a sulfonic or carboxylic acid group. For example, the dispersions may have a viscosity (20°C) of 5 to 20 MPas, preferably 7-18 MPas (DIN ISO 3219).

Non-fluorinated non-ionic surfactants may also be present in the dispersion, typically for increasing the shear stability of the dispersion. They may be added merely for that purpose or they may be present because they were added, for example, during the work-up proceedings, for example, during the ion-exchange process or upconcentration process. The aqueous dispersions provided herein may have a shear stability of at least 2 minutes, preferably at least 5 minutes.

Examples of non-ionic surfactants can be selected from the group of alkylarylpolyethoxy alcohols (although not preferred), polyoxyalkylene alkyl ether surfactants, and alkoxylated acetylenic diols, preferably ethoxylated acetylenic diols, and mixtures of such surfactants.

In particular embodiments, the non-ionic surfactant or mixture of non-ionic surfactants corresponds to the general formula:

R₁O-X-R₃ (V)

wherein R₁ represents a linear or branched aliphatic or aromatic hydrocarbon group that may contain one or more catenary oxygen atoms and having at least 8 carbon atoms, preferably 8 to 18 carbon atoms. In a preferred embodiment, the residue R₁ corresponds to a residue (R')(R")HC- wherein R' and R" are the same or different, linear, branched or cyclic alkyl groups. R₃ represents hydrogen or a C₁-C₃ alkyl group. X represents a plurality of ethoxy units that can also contain one or more propoxy unit. For example, X may represent - [CH₂CH₂O]ₙ-[R₂O]ₘ-R₃. R₂ represents an alkylene having 3 carbon atoms, n has a value of 0 to 40, m has a value of 0 to 40 and the sum of n+m is at least 2 and the distribution of [CH₂CH₂O] and [R₂O] units may be interchangeable and at random. When the above general formula represents a mixture, n and m will represent the average amount of the respective groups. Also, when the above formula represents a mixture, the indicated amount of carbon atoms in the aliphatic group R₁ may be an average number representing the average length of the hydrocarbon group in the surfactant mixture. Commercially available non-ionic surfactants or mixtures of non-ionic surfactants include those available from Clariant GmbH under the trade designation GENAPOL such as GENAPOL X-080 and GENAPOL PF 40. Further suitable non-ionic surfactants that are commercially available include those of the trade designation Tergitol TMN 6, Tergitol TMN 100X and Tergitol TMN 10 from Dow Chemical Company. Ethoxylated amines and amine oxides may also be used as emulsifiers.

Other examples of non-ionic surfactants include sugar surfactants, such as glycoside surfactants as described, for example, in WO2011/014715 A2 (Zipplies et al).

Another class of non-ionic surfactants includes polysorbates. Polysorbates include ethoxylated, propoxylated or alkoxylated sorbitans and may further contain linear cyclic or branched alkyl residues, such as but not limted to fatty alcohol or fatty acid residues. Useful polysorbates include those available under the trade designation Polysorbate 20, Polysorbate 40, Polysorbate 60 and Polysorbate 80. Polysorbate 20, is a laurate ester of sorbitol and its anhydrides having approximately twenty moles of ethylene oxide for each mole of sorbitol and sorbitol anhydrides. Polysorbate 40 is a palmitate ester of sorbitol and its anhydrides having approximately twenty moles of ethylene oxide for each mole of sorbitol and sorbitol anhydrides. Polysorbate 60 is a mixture of stearate and palmitate esters of sorbitol and its anhydrides having approximately twenty moles of ethylene oxide for each mole of sorbitol and sorbitol anhydrides.

Typically, the dispersions may contain from about 1 to 12 % by weight based on the weight of the dispersion of one or more non-ionic surfactants.

Polyelectrolytes, such as polyanionic compounds (for example polyanionic poly acrylates) may also be added to the dispersion in addition or instead of the surfactants described above.

The dispersions may further contain ingredients that may be beneficial when coating or impregnating the dispersion on a substrate, such as adhesion promoters, friction reducing agents, pigments and the like. Optional components include, for example, buffering agents and oxidizing agents as may be required or desired for the various applications.

The dispersions comprising the copolymers according to the present disclosure can be used to produce coatings or coating compositions for coating various substrates such as metals, or non-metals, for example polymer substrates and include fluoropolymer substrates. They may also be used to coat fabrics, such as, for example, glass fiber-based fabrics. Such fabrics may be used as architectural fabrics. Generally, the fluoropolymer dispersions may be blended with further components typically used to produce a final coating composition. Such further components may be dissolved or dispersed in an organic solvent such as toluene, xylene and the like. Typical components that are used in a final coating composition include polymers such as polyamide imides, polyimides or polyarylene sulphides or inorganic carbides, such as silicium carbide, and metal oxides. They are typically employed as heat resistant adhesion promoters or primers. Still further ingredients such as pigments and mica particles may be added as well to obtain the final coating composition. The fluoropolymer dispersions typically represent about 10 to 80% by weight of the final composition. Details on coating compositions for metal coatings and components used therein have been described in e.g. WO 02/78862, WO 94/14904, EP 1 016 466 A1, DE 2 714 593 A1, EP 0 329 154 A1, WO 0044576, and US 3,489,595.

The polymer dispersion can also be used to prepare dispersions with bimodal, and multimodal particle-size distributions for example by mixing different dispersions, for example by mixing with one or more other dispersions, for example PTFE dispersions. These distributions may have a wide distribution, such as, for example, particle sizes ranging from 20 nm to 1000 nm as disclosed in e.g. US 5,576,381, EP 0 990 009 B1 and EP 969 055 A1. Multi-modal fluoropolymer particle dispersions may present advantageous properties in coatings, such as better adhesion to the substrate and denser film formation.

The fluoropolymer dispersions may be used, for example, to laminate, coat and/or impregnate a substrate. The substrate or the treated surface thereof may be an inorganic or organic material. The substrate may be, for example a fiber, a fabric, a granule or a layer. Typical substrates include organic or inorganic fibers, preferably glass fibers, organic or inorganic fabrics, granules (such as polymer beads) and layers containing one or more organic polymers, including, for example, fluoropolymers. The fabrics may be woven or non-woven fabrics. The substrate may also be a metal or an article containing a metal surface or a fluoropolymer surface or layer, such as but not limited to PTFE surface or layers. In a preferred embodiment, the copolymers are used as additives for PTFE dispersions for providing coatings, for example anti-corrosive or low friction coatings of metal surfaces.
Coatings may be obtained with copolymers described herein having a critical film forming thickness of at least 5 µm. The coatings may have a transmittance of at least 55%, preferably greater than 60%, for example between 65% and 80%.

The dispersions when used to coat a substrate may provide coatings having a critical film forming thickness (CFT) of at least 5 µm. The dispersions may be provided typically at a pH between 9 and 11 but another pH may be adjusted if desired.

### Solids:

The fluoropolymers may also be used for melt processing and are processed as solids. For melt processing and making shaped articles the tetrafluoroethene copolymers are used in dry form and therefore have to be separated from the dispersion. The tetrafluoroethene copolymers described herein may be collected by deliberately coagulating them from the aqueous dispersions by methods known in the art. In one embodiment, the aqueous emulsion is stirred at high shear rates to deliberately coagulate the polymers. Other salt-free methods include the addition of mineral acids. If salt content is not a problem salts can be added as coagulating agents, such as for example, chloride salts or ammonium carbonate. Agglomerating agents such as hydrocarbons like toluenes, xylenes and the like may be added to increase the particle sizes and to form agglomerates. Agglomeration may lead to particles (secondary particles) having sizes of from about 0.5 to 1.5 mm, which may also be average sizes (median).

Drying of the coagulated and/or agglomerated polymer particles can be carried out at temperatures of, for example, from 100 °C to 300 °C. Particle sizes of coagulated particles can be determined by electron microscopy. The average particle sizes can be expressed as number average by standard particle size determination software. The particle sizes may be further increased by melt-pelletizing. The melt pellets may have a particle size (longest diameter) of from at least 2, typically from about 2 to about 10 mm.

The coagulated fluoropolymers or melt pellets may be subjected to a fluorination treatment as known in the art to remove thermally unstable end groups. Unstable end groups include -CONH₂, - COF and -COOH groups. Fluorination may be conducted so as to reduce the total number of those end groups to less than 100 or less than 50 per 10⁶ carbon atoms in the polymer backbone. Suitable fluorination methods are described for example in US 4,743,658 or DE 195 47 909 A1. The amount of end groups can be determined by IR spectroscopy as described for example in EP 226 668 A1. Another advantage of the present disclosure is that the polymers obtained by the polymerization have predominantly - COOH end groups and low amounts of-COF end groups. This allows easier and more effective fluorination because -COOH end groups convert more readily than -COF end groups. For making shaped articles the tetrafluoroethene copolymers are brought to the melt (optionally after having been pelletized) and are then processed from the melt to shaped articles, for example, by injection molding, blow molding, melt extruding, melt spinning, transfer-molding and the like. Additives may be added before or during the melt processing. Such articles include, for example, fibers, films, O-rings, containers, tubes, inner linings of hoses or containers or outer linings of wire, cables, components of pumps, housings and the like. The copolymers typically show good demolding properties, i.e. they can be easily removed from the processing equipment, e.g. molds.

Advantages and embodiments of this invention are further illustrated by way of examples, without, however, intending to limit the disclosure to these examples. The disclosure can be practised with other materials, ranges and embodiments within the scope of the claims.

### Methods:

### Melt flow index:

The melt flow index (MFI), reported in g/10 min, was measured according to DIN EN ISO 1133-1:2012 03 at a support weight of 5.0 kg. The MFI was obtained with a standardized extrusion die of 2.1 mm diameter and a length of 8.0 mm. Unless otherwise noted, a temperature of 372°C was applied.

### Tensile properties:

Tensile strength and elongation at break were determined at 23 °C following DIN EN ISO 527-1. Tests were performed with 2 mm thick test specimens according to DIN EN ISO 12086-2:2006-05 and with a testing speed of 50 mm/min. The results of measurements with five test specimen were averaged.

### Melting peaks:

Melting peaks of the fluororesins were determined in accordance with DIN EN ISO 11357-3:2013-04 using a Mettler-Toledo DSC 2 under nitrogen flow and heating and cooling rates of 10°C/min. The indicated melting points relate to the melting peak maximum of the second heating run.

### Particle size determination:

The latex particle size determination can be conducted by means of dynamic light scattering with a *Malvern Zetasizer 1000 HSA* in accordance to DIN ISO 13321:2004 10. Particle sizes of solid particles (not of dispersions as above) can be determined by optical microscopy and using particle size software or imaging. If particles are not regular or spherical the largest dimension is chosen as diameter of the particle.

### Content of perfluorinated alkanoic acids:

The polymer latex was freezed dried to remove the water after spiking with a surrogate recovery standard (SRS) ¹³C₄-PFOA (perfluorooctanoic acid having 4 of its carbon atoms replaced by ¹³C isotopes; commercially available from Campro Scientific GmbH, Berlin, Germany) at a concentration of 25 ppb based on solid content of the dispersion. 1 g of the freeze-dried polymer material was treated with 3 ml methanol in a vial for 16 h @ 250 rpm stirring speed and a temperature of 50°C) to extract perfluorinated alkanoic acids. The mixture was centrifuged (-10 min @ 4400 rpm) and an aliquot of the supernatant was transferred into a 2ml autosampler vial.

The extract was analyzed for perfluorocarboxylic acids with reversed phase HPLC coupled with a triple quadrupole mass spectrometer (e.g. Agilent 6460 or ABSciex API 4000 QQQ-MS) in negative Multiple Reaction Mode (MRM) using analyte typical transitions, e.g. m/z 413 -> 369 for PFOA. The HPLC (Agilent 1200 or 1260) was equipped with an Agilent C18 column (Zorbax Eclipse XDB-C18 4.6x50mm 1.8 µm) and run in gradient mode with high purity water and methanol @ 50°C, both solvents were LC-MS grade and modified with 10 mmol ammonium acetate (gradient 15% MeOH -> 100% MeOH). The analytes were quantified using equivalent or similar isotope labelled internal standards (e.g. ¹³C₈-PFOA as internal standard for PFOA, available from Campro Scientific GmbH, Berlin, Germany) in a calibration range of 0.5 - 200 ng/ml analyte in methanolic extract, resulting in a lower level of quantification (LLOQ) related to polymer of 1.5 ppb and an upper limit of quantification (ULOQ) of 600 ppb. Analytes with concentrations higher than ULOQ were diluted with methanol into the calibration range and the analysis was repeated.

### Solid Content:

The solid content (fluoropolymer content) of the dispersions can be determined gravimetrically according to ISO 12086. A correction for non-volatile inorganic salts is not carried out. The solid content of the polymer dispersions is taken as polymer content.

### Vinyl and allyl ether comonomer content:

Thin films of approximately 0.1 mm thickness were prepared by moulding the polymer at 350 °C using a heated plate press. These films were then scanned in nitrogen atmosphere using a Nicolet DX 510 FT-IR spectrometer. The OMNIC software (ThermoFisher Scientific, Waltham, Mass.) was used for data analysis. Herein the *CF₂*=*CF-CF₂-O-CF₂-CF₂-CF₃* (MA-3) content, reported in units of weight%, was determined from an infrared band at 999 1/cm and was calculated as 1.24 x the ratio (factor determined by means of solid-state NMR) of the 999 1/cm absorbance to the absorbance of the reference peak located at 2365 1/cm. The *CF₂=CF-O-CFs* (PMVE) content, reported in units of weight%, was determined from an infrared band at 889 1/cm and was calculated as 11.2 x the ratio of the 889 1/cm absorbance to the absorbance of the reference peak located at 2365 1/cm. The *CF₂*=*CF-O-CF₂-CF₂-CF₃* (PPVE) content, reported in units of weight%, was determined from an infrared band at 993 1/cm and was calculated as 0.95 x the ratio of the 993 1/cm absorbance to the absorbance of the reference peak located at 2365 1/cm.

### Shear stability:

150 g dispersion, thermostated to 20°C, were put in a 250 ml standard glass beaker of an inner diameter of 65 mm. The agitation head (S 25 N - 25 G) of an Ultra Turrax T25, supplied by Janke & Kunkel, was immersed in the center of the beaker such that the end of the head was 7 mm above the beaker bottom. The Ultra Turrax was switched on at a revolution speed of 8000 rpm. Agitation rendered the surface of the dispersion "turbulent" or "wavy". After 10 to 20 sec, 2.0 g xylene were added dropwise within less than 10 sec to the agitated dispersion. Time measurement started with the addition of xylene and was stopped when the surface of the agitated dispersion no longer showed visible turbulence. The surface "freezes" or smoothes due to coagulation. Coagulation was accompanied by a characteristic change of sound of the Ultra Turrax. In case that the "surface freezing" could not be observed clearly due to foam formation the time measurement was stopped with the onset of the change of sound. Reported shear stability values in the examples are the average of 5 measurements.

### Specific gravity:

The protocol of DIN EN ISO 12086 can be followed.

### Transmission/transmittance:

The transmission can be measured according to ASTM D 1003 using a direct reading haze meter, (the transparency meter "haze-gard plus", from BYK-Gardner GmbH, Geretsried, Germany, serial number 111156). Samples can be prepared as follows: The dispersion is precipitated by adding 1 litre of dispersion into a 2L beaker and mixing it with 20 ml of concentrated hydrochloric acid at a stirring speed of 800 rpm and agglomerated by adding 10 ml of gasoline (Shellsol 80-110). The precipitate is washed with distilled water and dried in a rotary evaporator at 90°C at reduced pressure. The dried agglomerates are then dried further in a vacuum oven at 210°C for 16 h. 10 g of the precipitate are sieved through a 2 mm sieve and then compressed in a 4-stations press (350 bar, 5 min holding time) into a sheet having a diameter of 80 mm. This sheet is sintered as follows: heating from room temperature to 290 °C at the maximum heating rate. Then the sample is heated from 290 °C to 380 °C at a heating rate of 120 °C per hour and holding the temperature of 380 °C for 30 min before cooling the sample down to a temperature of 294 °C at a cooling rate of 60 °C per hour after which the oven is switched off and the samples were allowed to reach room temperature. The haze meter indicates transmission values (in per cent) of the samples.

### Critical film thickness (CTF):

A 200ml ml beaker was filled with the dispersion. Foam, if present, was removed by a pipette. A degreased aluminum test plate (200mm x 40mm x 1 mm; degreasing by rinsing with acetone), was immersed into the dispersion for 10 seconds and then hung at a plate holder at an angle of 20° and dried at ambient conditions for 5 minutes. The test sample was then put in an oven kept at 380°C for 10 minutes. The aluminum plate was then taken out of the oven and allowed to cool down at ambient conditions to reach room temperature. The plate was then examined by an optical microscope (100 x magnification) for the formation of cracks. The thickness of the layer formed on the aluminum plate was determined (using a MiniTest 3100 from ElektroPhysik Dr. Steingroever GmbH& Co. KG, Cologne, Germany). The procedure was repeated until cracks were visible. The thickness of the layer before cracks have appeared is determined as critical film thickness. The results reported were the average from two measurements.

### Examples

### Example 1 (Ex 1)

### TFE/MA-3 copolymer

A polymerization kettle with a total volume of 48 L equipped with an impeller agitator system was charged with 28 L deionized water and 670 g of a 30 mass% aqueous solution of ammonium 4,8-dioxa-3-H-perfluorononanoate (CF₃-O-(CF₂)₃-O-CFH-CF₂-COONH₄, prepared as described in "Preparation of Compound 11" in U.S. Pat. No. 7,671,112). The oxygen-free kettle was then heated up to 90 °C and the agitation system was set to 230 rpm. The kettle was charged with 40 mbar ethane and 100 g MA-3. Then the reactor was pressurized with 365 g TFE to 6 bar absolute reaction pressure. The polymerization was initiated by the addition of 2 g ammonium peroxydisulfate (APS). As the reaction started, the reaction temperature of 90 °C was maintained and the reaction pressure of 6 bar absolute was maintained by feeding TFE and MA-3 into the gas phase with monomer mole fractions of *x*_{TFE} = 0.9924 and *x*_{MA}-₃ = 0.0076. During the polymerization period a 0.5 mass% aqueous solution of APS was added to the kettle at constant rate of 135 g/h. When a total feed of 6 kg TFE was reached in 240 min, the feed of the monomers was interrupted by closing the monomer valves. Then the reactor was vented and flushed with N₂ in four cycles. The so-obtained 35 kg polymer dispersion, having a solid content of 17.5 mass% and latex particles with 183 nm in diameter according to dynamic light scattering, was removed at the bottom of the reactor. After the polymerization was completed a sample was freeze-coagulated at -18 °C in a refrigerator overnight. After defrosting, the so-obtained agglomerate was washed five times with deionized water under vigorous agitation and then dried in an oven at 130 °C for 12 hours. The polymer showed a melting point of 312 °C, an MFI of 10 g/10 min, an MA-3 content of 1.9 mass%, a tensile strength of 23.9 MPa (23 °C), and an elongation at break of 369 % (23 °C).

The dispersion was upconcentrated by thermal treatment (evaporation) to reach a solid content of about 50% by weight. 5.0 % weight of non-fluorinated non-ionic surfactants were added. The shear stability of the dispersion was determined to be 228 s. The content of perfluorinated alkanoic acids is given in Table 1.

### Example 2 (Ex 2)

### TFE/MA-3 copolymer, HFP addition

A copolymer was prepared in the same manner as in Ex 1 except that after feeding 5.6 kg of TFE the feeding of MA-3 was stopped and 2 g APS were added. Subsequently 60 g of HFP were added. After 270 min of polymerization time 35.5 kg of polymer dispersion was obtained with a solid content of 17.6 mass% and latex particles with 184 nm in diameter. The polymer showed a melting point of 312 °C, an MFI of 12.5 g/10 min, and an MA-3 content of 2.0 mass%.

The raw dispersion was upconcentrated as described in example 1. The shear stability of the dispersion was determined to be 278 s. The content of perfluorinated alkanoic acids is given in Table 1.

### Example 3 (Ex 3)

### TFE/MA-3 copolymer, MV4S addition

A copolymer was prepared in the same manner as in Ex 1 except that after feeding 5.6 kg of TFE the feeding of MA-3 was stopped and 2 g APS were added. Subsequently 32 g of an aqueous emulsion of perfluoro(5-oxahept-6-ene-1-sulfonyl fluoride) (CF₂=CF-O-(CF₂)₄-SO₂F; MV4S) (50 mass%) and ammonium-4,8-dioxa-3-H-perfluorononanoate (0.25 mass%) were added. After 240 min of polymerization time 35 kg of polymer dispersion was obtained with a solid content of 17.7 mass% and latex particles with 181 nm in diameter.
The polymer showed a melting point of 312 °C, an MFI of 9.6 g/10 min, and an MA-3 content of 2.0 mass%.

The raw dispersion was upconcentrated as described in example 1. The shear stability of the dispersion was determined to be more than 60 min. The content of perfluorinated alkanoic acids is given in Table 1.

### Comparative Example 1 (Comp Ex 1)

### TFE/PMVE copolymer

The copolymer of Comparative Example 1 was prepared using a method similar to the one of Example 1. However, the kettle was heated up to 70 °C before charging with 140 mbar ethane and 57 g PMVE. Then the reactor was pressurized with 640 g TFE to 8.7 bar absolute reaction pressure. The polymerization was initiated by the addition of 7 g ammonium peroxydisulfate (APS). A polymerization temperature of 70 °C and a reaction pressure of 8.7 bar were used. The monomer feed mole fractions were adjusted to *x*_{TFE} = 0.985 and *x*_{PMVE} = 0.015. During the polymerization no APS was added to the kettle. When a total feed of 12.2 kg TFE was reached in 270 min, the feed of the monomers was interrupted by closing the monomer valves. The so-obtained 43 kg polymer dispersion, having a solid content of 29.5 mass% and latex particles with 150 nm in diameter according to dynamic light scattering, was removed at the bottom of the reactor. The polymer showed a melting point of 309 °C, an MFI of 16 g/10 min, and a PMVE content of 2.5 mass%. Because the material was very brittle, the required test specimen for tensile tests could not be prepared.

The raw dispersion was upconcentrated as described in example 1. The shear stability of the dispersion was determined to be 284 s. The content of perfluorinated alkanoic acids is given in Table 1.

### Comparative Example 2 (Comp Ex 2)

### TFE/PPVE copolymer

The copolymer of Comparative Example 2 was prepared using a method similar to the one of Example 1. However, only 390 g of a 30 mass% aqueous solution of ammonium 4,8-dioxa-3-H-perfluorononanoate was used. Additionally, the kettle was heated up to 70 °C before charging with 110 mbar ethane and 90 g PPVE-1. Then the reactor was pressurized with 1100 g TFE to 8.7 bar absolute reaction pressure. The polymerization was initiated by the addition of 1.7 g ammonium peroxydisulfate (APS). A polymerization temperature of 70 °C and a reaction pressure of 8.7 bar were used. The monomer feed mole fractions were adjusted to *x*_{TFE} = 0.985 and *x*_{PPVE-1} = 0.015. During the polymerization no APS was added to the kettle. When a total feed of 12.2 kg TFE was reached in 260 min, the feed of the monomers was interrupted by closing the monomer valves. The so-obtained 43 kg polymer dispersion, having a solid content of 29.4 mass% and latex particles with 153 nm in diameter according to dynamic light scattering, was removed at the bottom of the reactor. The polymer showed a melting point of 310 °C, an MFI of 9.3 g/10 min, a PPVE-1 content of 3.3 mass%, a tensile strength of 27.4 MPa (23 °C), and an elongation at break of 366 % (23 °C).

The raw dispersion was upconcentrated as described in example 1. The shear stability of the dispersion was determined to be 970 s. The content of perfluorinated alkanoic acids is given in Table 1.

### Example 4 (Ex 4)

### TFE/MA-3/PMVE copolymer

The copolymer of Example 4 was prepared using a method similar to the one of Example 1. However, the kettle was charged with 13 mbar ethane, 87 g MA-3, and 29 g PMVE. Then the reactor was pressurized with 560 g TFE to 8.7 bar absolute reaction pressure. The polymerization was initiated by the addition of 3.7 g ammonium peroxydisulfate (APS). A reaction pressure of 8.7 bar was used. The monomer feed mole fractions were adjusted to *x*_{TFE} = 0.988, *x*_{MA-3} = 0.004, and *x*_{PMVE} = 0.008. During the polymerization period a 0.5 mass% aqueous solution of APS was added to the kettle at constant rate of 100 g/h. When a total feed of 5.9 kg TFE was reached in 210 min, the feed of the monomers was interrupted by closing the monomer valves. The so-obtained 37 kg polymer dispersion, having a solid content of 17.0 mass% and latex particles with 146 nm in diameter according to dynamic light scattering, was removed at the bottom of the reactor. The polymer showed a melting point of 306 °C, an MFI of 2.0 g/10 min, an MA-3 content of 1.3 mass%, a PMVE content of 0.9 mass%, a tensile strength of 32.0 MPa (23 °C), and an elongation at break of 372 % (23 °C).

The raw dispersion was upconcentrated as described in example 1. The shear stability of the dispersion was determined to be 106 s. The content of perfluorinated alkanoic acids is given in Table 1.

**Table 1: Content of perfluorinated alkanoic acids in ppb relative to solid content of the dispersion.**

| Example | C₉ | C₁₀ | C₁₁ | C₁₂ | Sum C₉-C₁₂ |
|---|---|---|---|---|---|
| Ex 1 | 1.9 | < 1.4 | < 1.4 | < 1.4 | < 6.1 |
| Ex 2 | < 13.0 | < 13.0 | < 13.0 | < 13.0 | < 52.0 |
| Ex 3 | < 13.0 | < 13.0 | 32.8 | < 13.0 | < 71.8 |
| Comp Ex 1 | 3.0 | 3.8 | 2.4 | < 1.4 | < 10.6 |
| Comp Ex 2 | 6729.0 | 177.1 | 6033.0 | 148.2 | 13087.3 |
| Ex 4 | < 13.2 | < 13.2 | < 13.2 | < 13.2 | < 52.8 |

## Claims

1. A tetrafluoroethene copolymer having a melting point of from about 240°C to 325°C, a melt flow index (MFI at 372°C and 5 kg load) of 0.5-80 grams / 10 minutes and having at least 70% by weight of units derived from tetrafluoroethene and further comprising units derived from perfluoromethyl vinyl ether (PMVE) and at least one perfluorinated alkyl allyl ether (PAAE) comonomer corresponding to the general formula:
CF₂=CF-CF₂-O-Rf (I)
where Rf is a perfluorinated alkyl residue having from 1 to 10 carbon atoms and wherein the alkyl chain of the residue may be interrupted once or more than once by an oxygen atom and wherein the content of units derived from PMVE and PAAEs is at least 1.0 % by weight.

2. The tetrafluoroethene copolymer of claim 1 having a melting point between 265°C and 325°C, a melt flow index between 1 and 80 g / 10 mins and further comprising at least 90% by weight of units derived from TFE.

3. The tetrafluoroethene copolymer of any one of the preceding claims having a melting point between 265°C and 325°C, a melt flow index between 1 and 80 g / 10 mins and further comprising at least 90% by weight of units derived from TFE and further having a tensile strength of at least 17 MPa and an elongation at break of at least 230%.

4. The tetrafluoroethene copolymer of any one of the preceding claims having a melting point between 265°C and 325°C, a melt flow index between 1 and 80 g / 10 mins and further comprising at least 90% by weight, preferably at least 95% by weight, of units derived from TFE and further having a tensile strength of at least 17 MPa and an elongation at break of at least 230% and wherein the polymer comprises a PAAE with Rf selected from the group consisting of: perfluoromethyl (-CF₃), perfluoroethyl (-C₂F₅), perfluoropropyl (-C₃F₇) and perfluorobutyl (C₄F₉), preferably -C₂F₅, -C₃F₇ or -C₄F₉.

5. The tetrafluoroethene copolymer of any one of the preceding claims wherein the polymer comprises a PAAE selected from CF₂=CF-CF₂-O-CF₂-CF₂-CF₃ (MA-3).

6. The tetrafluoroethene copolymer of claim 1 having a melting point between 240°C and 280°C, a melt flow index between 0.8 and 80 g / 10 mins and further comprising repeating units derived from hexafluoropropene.

7. The tetrafluoroethene copolymer of claim 6 further having a tensile strength of at least 17 MPa and an elongation at break of at least 230%.

8. The tetrafluoroethene copolymer of claims 6 or 7 and wherein the polymer comprises a PAAE with Rf selected from the group consisting of: perfluoromethyl (-CF₃), perfluoroethyl (-C₂F₅), perfluoropropyl (-C₃F₇) and perfluorobutyl (C₄F₉), preferably -C₂F₅, -C₃F₇ or -C₄F₉.

9. The tetrafluoroethene copolymer of any one of the preceding claims 6 to 8 wherein the polymer comprises a PAAE selected from CF₂=CF-CF₂-O-CF₂-CF₂-CF₃ (MA-3).

10. An aqueous dispersion comprising the fluoropolymer according to any one of the preceding claims.

11. The aqueous dispersion of claim 10 having a total amount of perfluorinated C6 - C14 alkanoic acids or salts thereof of less than 500 ppb.

12. The aqueous dispersion of claim 10 having a total amount of perfluorinated C9-C12 alkanoic acids or salts thereof of less than 300 ppb, preferably less than 100 ppb.

13. An aqueous dispersion comprising at least 50% by weight of a tetrafluoroethene copolymer having a melting point of from about 240°C to 325°C, a melt flow index (MFI at 372°C and 5 kg load) of 0.5-80 grams / 10 minutes said dispersion having a total amount of perfluorinated C6 - C14 alkanoic acids or salts thereof of less than 500 ppb.

14. The aqueous dispersion of claim 13 having a total amount of perfluorinated C9-C12 alkanoic acids or salts thereof of less than 300 ppb, preferably less than 100 ppb.

15. The aqueous dispersion of any one of claims 10 to 14 further comprising one or more fluorinated surfactants corresponding to the general formula
[R_{f}-O-L-COO-]ᵢX^{¡+} (IV)
wherein L represents a linear, branched or cyclic, partially or fully fluorinated alkylene group or an aliphatic hydrocarbon group, R_{f} represents a partially or fully fluorinated aliphatic group or a partially or fully fluorinated aliphatic group interrupted once or more than once with an oxygen ether atom, Xⁱ⁺ represents a cation having the valence i and i is 1, 2 or 3.

16. The aqueous dispersion of any one of claims 10 to 15 further comprising one or more non-fluorinated, non-ionic emulsifiers.

17. A method for producing a tetrafluoroethene copolymer according to any one of claims 1 to 9 comprising copolymerizing tetrafluoroethene, perfluoromethyl vinyl ether and the one or more perfluorinated alkyl allyl ethers, through aqueous emulsion polymerization without added perfluorinated alkanoic acid emulsifiers.

18. An article comprising a tetrafluoroethene copolymer according to any one of claims 1 to 9.

19. The article of claim 18 selected from the group consisting of tubes, hoses, cables, pumps, valves, wafers, containers and lids.

20. A coating obtained with the dispersion of any one of claims 10 to 16.

21. Method of making a coating comprising providing a composition comprising the dispersion according to any one of claims 10 to 16 and applying the composition to a substrate and removing the water.
